Europäisches Patentamt

European Patent Office

Office européen des brevets

(11) Publication number: **0 167 273 B1**

# EUROPEAN PATENT SPECIFICATION

(45) Date of publication of patent specification: **06.03.91**　(51) Int. Cl.⁵: **B29D 30/00, B60C 15/024**

(21) Application number: **85303821.4**

(22) Date of filing: **30.05.85**

(54) Manufacture of tyres.

(30) Priority: **28.06.84 GB 8416527**

(43) Date of publication of application:
**08.01.86 Bulletin 86/02**

(45) Publication of the grant of the patent:
**06.03.91 Bulletin 91/10**

(84) Designated Contracting States:
**DE FR GB**

(56) References cited:
**DE-A- 2 159 083　　DE-A- 2 724 996**
**DE-C- 896 771　　　FR-A- 1 216 276**
**FR-A- 2 159 419　　GB-A- 1 480 917**
**GB-A- 2 004 508**

(73) Proprietor: **DUNLOP LIMITED**
**Silvertown House Vincent Square**
**London SW1P 2PL(GB)**

(72) Inventor: **Bramma, John Edwin Lewis**
**113 Church Lane**
**Handsworth Wood Birmingham(GB)**
Inventor: **Westwell, Peter David**
**1888 Coventry Road**
**Sheldon Birmingham B26 3HH(GB)**

(74) Representative: **Treves, Barry William et al**
**BTR Group Patent & Trade Mark Service P.O.**
**Box 504**
**Erdington Birmingham B24 9QH(GB)**

## Description

This invention relates to the manufacture of tyres according to the preamble of claim 1 and in particular to a method of manufacture for tyres having bead regions which include toe regions which have special shape or properties in the region outside the carcass reinforcement.

It is particularly useful for manufacturing tyres of the type intended for TD wheel rims which tyres are disclosed in UK Patent Specification No 1,584,553 dated 27 May 1977. Such tyres have a radially and axially inwardly projecting toe on each bead which toe is required to be substantially stiff in the direction of its length from the bead core to the tip of the toe. The stiffness is required to generate bead retaining tension in the bead core when the tyre is brought under a side force and the air pressure within the tyre is insufficient to itself retain the bead in position on its seat.

In French Patent Specification No FR-A-1216276, upon which the preamble of claim 1 is based, there is disclosed a method of manufacture for a tyre comprising fitting to each bead region a preformed component.

The manufacture of tyres for TD wheel rims, whilst being quite practicable, has been found to produce a greater percentage of reject tyres and a greater variation in tyre uniformity than for conventional tyres. Furthermore variations on toe geometry and the positions of the various toe components has resulted in variable bead retention properties in production tyres.

It is an object of the present invention to provide a method of manufacture for tyres which include in the bead region outside the carcass reinforcement a region having a special requirement in shape and/or properties which allows the carcass to be assembled and shaped by way of the normal assembly processes and yet provides the required precision in the bead region.

According to the present invention a method of manufacture for a tyre having a radially and axially inwardly directed bead toe comprises assembling a tyre carcass comprising an inner liner, bead cores and a carcass reinforcement in a flat or low crown building machine, and fitting to each bead region a preformed component characterised by extruding the preformed component from unvulcanised elastomeric material to a first cross-section, folding the component longitudinally to produce the finished cross-section, assembling the folded component into position as the bead toe of an unshaped unvulcanised tyre, and subseqently shaping and vulcanising the tyre so formed.

The bead toe component may be preformed immediately prior to fitting it to the bead region. The bead toe component may be preformed at a position remote from the tyre carcass.

A toe chafer or reinforcement strip of fabric may be applied to the extrudate when required in the finished toe and the step of applying the fabric may be facilitated by extruding a cross-section designed so that the strip may be applied as a flat strip and using the subsequent longitudinal folding operation to fold the flat strip into the folded or curved shape required in the bead toe. The fabric may be positioned on the outer surface of the length of rubber toe compound or within it. Other reinforcement material can also be incorporated in the preformed toe, for example, fibrous filler material or other stiffness enhancing materials or structures.

The length of preformed toe compound may be fed directly to the shaped tyre carcass and cut off when the toe has been applied around the bead or the required length may be cut off prior to taking it to the shaped carcass. Alternatively, the length of the section may be joined end-to-end into a ring prior to fitting it to the tyre carcass.

The method may be applied to crossply, radial ply or belted bias ply tyres so long as the carcass is shaped prior to fitting the toe component. In the case of belted bias tyres and radial tyres the toe is preferably fitted after the tread and breaker assembly has been fitted but this is not essential.

As will be appreciated the method allows an accurate and consistently shaped toe to be produced without material flow around the bead core on tyre shaping. This allows very accurate placement of hard rubber compound toes. Furthermore the lack of toe compound when the tyre carcass is shaped allows the carcass ply to move freely and consistently around the bead core to produce more consistent tyre carcasses.

Further aspects of the present invention will be apparent from the following description, by way of example only, of two embodiments in conjunction with the attached diagrammatic drawings in which:-

Figure 1    is a cross-section of a tyre having a bead toe made by the present invention fitted to a TD wheel rim;

Figure 2    is an enlarged view of a bead similar to that of Figure 1;

Figure 3    is a cross-sectional view of one bead toe component;

Figure 4    is a cross-sectional view of another bead toe component, and

Figure 5    shows the bead toe component of Figure 4 partly assembled.

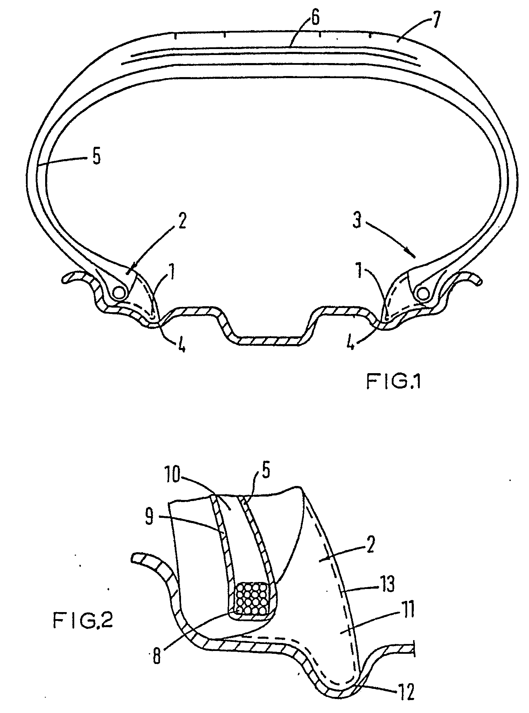

The tyre shown in Figure 1 is a radial car tyre of the type having a bead retaining toe I at each bead 2 and 3 engaged in a groove 4 in a TD-type wheel rim. The tyre has a radial carcass reinforcement 5, a breaker or tread reinforcement structure 6 and a ground contacting tread 7.

Each bead comprises a bead core 8 which is a 4 x 4 creel bead formed by an assembly of steel wires into a rectangular cross-section. The carcass ply 5 is shaped around the bead core 8 and extends a short distance radially outwards of the bead 2 or 3 to give a ply turn-up 9. A hard rubber apex strip 10 is positioned radially outwards of the bead core 8. Finally the bead toe I comprises a shaped toe component II mounted axially inwardly of the bead core 8 and shaped as shown to engage the, groove 4 in the wheel rim. The bead properties are as described in U K Patent Specification No 1 584 553 and are basically that the toe is stiff between the tip 12 and the bead core 8 by means of the material of the toe component II being hard and the toe having a chafer strip 13 of cross-woven material positioned around the toe to act as a skin to prevent the toe bulging when it comes under load as a result of bead rotation about the tip 12.

The tyre is manufactured beginning on a flat tyre building drum in basically an entirely conventional manner. An inner liner ply and carcass reinforcement ply 5 are laid on the drum followed by two bead assemblies, each comprising a bead core 8 and an apex strip 10. The ply ends are folded around the bead cores and sidewall components are added so that the resultant assembly is a tube having a length of the tyre cross-sectional periphery laid out flat.

At this stage in conventional tyre building the toe strips and bead chafers are assembled to the carcass but this is not done. Instead the carcass is removed from the flat building drum and placed on a second stage machine where the carcass is shaped to a toroid and the breaker and tread rubber components are added in the conventional manner followed by component rolling down to finish the main part of the tyre.

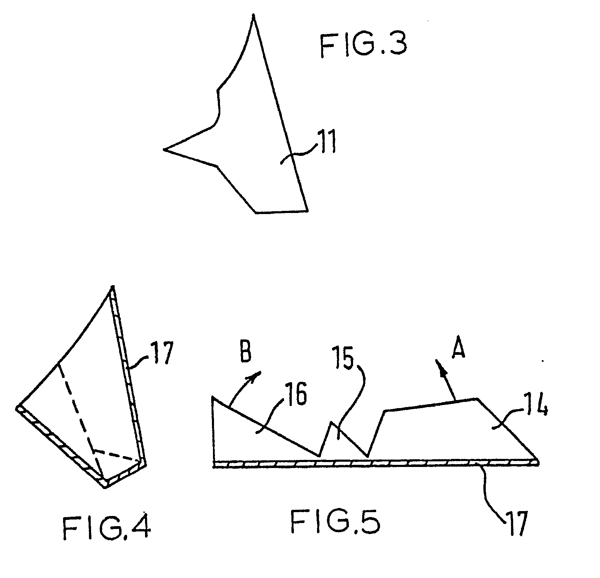

Meanwhile, a continuous length of toe strip material is extruded having the cross-section of Figure 3. Two lengths of this strip are cut off each having the length required to form the bead toe component II. Each length is then fitted to a bead of the tyre making a butt joint to complete the circular toe at each bead. Finally a strip of toe chafer strip 13 which is a cross-woven nylon fabric is positioned around the toe component II and finally a shaped roller is run around the toe to consolidate it. The resultant completed green tyre is then cured in a tyre mould having a bead ring profiled to give the finished tyre toe shape as shown in Figures 1 and 2.

As will be appreciated the toe chafer strip is optional. Nevertheless in many cases it is required and an alternative method of fitting the fabric chafer is shown in Figures 4 end 5. In this case the toe component section which is extruded is that shown in Figure 5 where the extrusion comprises three linked together members 14,15,16. The extrusion is laid onto a strip of fabric 17 and then the members 14 and 16 are longitudinally folded in the directions of arrows A and B respectively to give the toe assembly shown in Figure 4. (Note the joins are shown by broken lines in Figure 4).

The resultant toe component is then built on to a tyre carcass in the same manner as before.

It is an important advantage that the shaping process is carried out without the tyre toe component II being present and this has advantages both in allowing free shaping of the carcass end movement of the carcass around the bead end in avoiding the need to change the toe shape as it is rotated from the flat built tube position to the position in the shaped tyre carcass.

The latter advantage widens the range of toe materials and hardnesses which can be built into a tyre successfully whilst the former advantage allows full access to the advantages of bead constructions such as cable beads which allow smooth and more uniform sliding of tyre carcass ply material round the bead core on shaping.

Finally, the use of a pre-shaped bead toe assembly greatly increases the accuracy of its shape and positioning in respect of the bead core and thus the final toe properties may be made better and more consistent from tyre to tyre.

## Claims

1. A method of manufacture for a tyre having a radially and axially inwardly directed bead toe (I) comprising assembling a tyre carcass comprising an inner liner, bead cores (8) and a carcass reinforcement (5) in a flat or low crown building machine and fitting to each bead region (2 and 3) a preformed component characterised by extruding the preformed component (II) from unvulcanised elastomeric material to a first cross-section (Figure 5), folding the component longitudinally to produce the finished cross-section (Figure 4), assembling the folded component into position as the bead toe (I) of an unshaped unvulcanised tyre, and subsequently shaping and vulcanising the tyre so formed.

2. A method of manufacture for a tyre according to Claim 1 characterised in that the component (II) is preformed immediately prior to fitting to the bead region (2 or 3).

3. A method of manufacture for a tyre according to Claim 1 or 2 characterised in that the component (II) is preformed at a position remote from the tyre carcass (5).

4. A method of manufacture for a tyre according to any one of the preceding claims characterised in that a toe chafer strip of fabric (17) is applied to the extrudate so that when the cross-section (Figure 5) is folded the strip (17) is shaped to lie around the bead toe (I).

5. A method of manufacture for a tyre according to any one of the preceding claims characterised in that reinforcement material such as fibrous filler is incorporated in the preformed component (II).

**Revendications**

1. Procédé pour fabriquer un pneumatique possédant un bout de talon (1) dirigé radialement et axialement vers l'intérieur, procédé qui comprend l'assemblage d'une carcasse de pneumatique comportant un revêtement intérieur, des tringles de talons (8) et une armature de carcasse (5) dans une machine à confectionner de type plat ou à sommet bas, de même que le montage d'un composant préformé sur chaque région de talon (2 et 3), caractérisé par l'extrusion du composant (11) préformé avec une première section droite (figure 5), en élastomère non vulcanisé, le pliage du composant dans le sens de la longueur pour produire la section droite finie (figure 4), le montage en place du composant plié en tant que bout de talon (1) d'un pneumatique non vulcanisé ni mis en forme, puis la mise en forme et la vulcanisation du pneumatique ainsi obtenu.

2. Procédé pour fabriquer un pneumatique selon la revendication 1, caractérisé en ce que le composant (11) est préformé immédiatement avant le montage sur la région de talon (2 ou 3).

3. Procédé pour fabriquer un pneumatique selon la revendication 1 ou 2, caractérisé en ce que le composant (11) est préformé à un endroit éloigné de la carcasse du pneumatique (5).

4. Procédé pour fabriquer un pneumatique selon l'une quelconque des revendications précédentes, caractérisé en ce qu'une bandelette (17) de bout de talon est appliquée au produit extrudé, de sorte que lors du pliage de la section droite (figure 5), la bandelette (17) est conformée de manière qu'elle soit disposée autour du bout de talon (1).

5. Procédé pour fabriquer un pneumatique selon l'une quelconque des revendications précédentes, caractérisé en ce que du matériau de renfort tel qu'un matériau fibreux de remplissage est incorporé dans le composant préformé (11).

**Ansprüche**

1. Herstellverfahren für einen Reifen mit einer radial und axial nach innen gerichteten Wulstzehe (1), bei dem eine Reifenkarkasse mit einer inneren Auskleidung, Wulstkernen (8) und einer Karkassverstärkung (5) in einer Flach- oder Niedrig-Kronen-Aufbaumaschine zusammengebaut wird und an jeden Wulstbereich (2 und 3) eine vorgebildete Komponente angepaßt wird, dadurch gekennzeichnet, daß die vorgebildete Komponente (11) aus einem unvulkanisierten elastomeren Material zu einer ersten Querschnittsform (Fig. 5) extrudiert wird, daß die Komponente in Längsrichtung gefaltet wird, um die endgültige Querschnittsform (Fig. 4) zu erzeugen, daß die gefaltete Komponente in ihre Lage als Wulstzehe (1) eines ungeformten unvulkanisierten Reifens eingebaut wird und daraufhin der so gebildete Reifen geformt und vulkanisiert wird.

2. Herstellverfahren für einen Reifen nach Anspruch 1, dadurch gekenzeichnet, daß die Komponente (11) unmittelbar vor dem Anpassen an den Wulstbereich (2 oder 3) vorgebildet wird.

3. Herstellverfahren für einen Reifen nach Anspruch 1 oder 2, dadurch gekennzeichnet, daß die Komponente (11) in einer von der Reifenkarkasse (5) entfernt liegenden Lage vorgebildet wird.

4. Herstellverfahren für einen Reifen nach einem der vorangehenden Ansprüche, dadurch gekennzeichnet, daß ein Wulstzehenband-Gewebestreifen (17) auf das Extrudat aufgebracht wird, so daß, wenn der Querschnitt (Fig. 5) gefaltet wird, der Streifen (17) um die Wulstzehe (1) herum liegend geformt wird.

5. Herstellverfahren für einen Reifen nach einem der vorangehenden Ansprüche, dadurch gekennzeichnet, daß Verstärkungsmaterial wie Faser-Füllstoff in die vorgebildete Komponente (11) aufgenommen wird.

FIG.1

FIG.2

FIG.3

11

17

FIG.4

B

16

15

A

14

17

FIG.5